# EUROPÄISCHE PATENTSCHRIFT

(11) **EP 1 430 665 B1**
(45) Veröffentlichungstag und Bekanntmachung des Hinweises auf die Patenterteilung: **07.12.2005**
(21) Anmeldenummer: 02776711.0
(22) Anmeldetag: 24.09.2002
(51) Int. Cl.: H04L 12/56

(54) **VERFAHREN UND VORRICHTUNG ZUR ANPASSUNG VON LABEL-SWITCHED-PFADEN IN PAKETNETZEN**
METHOD AND DEVICE FOR ADAPTING LABEL-SWITCHED PATHS IN PACKET NETWORKS
PROCEDE ET DISPOSITIF D'ADAPTATION DE CHEMINS A COMMUTATION D'ETIQUETTES DANS DES RESEAUX PAQUETS

(30) Priorität: 27.09.2001 DE 10147748
(43) Veröffentlichungstag der Anmeldung: 23.06.2004
(73) Patentinhaber: SIEMENS AKTIENGESELLSCHAFT, 80333 München (DE)
(72) Erfinder: KIRSTÄDTER, Andreas, 85560 Ebersberg (DE); GRIMMINGER, Jochen, 80638 München (DE)
(86) Internationale Anmeldenummer: PCT/DE2002/003595
(87) Internationale Veröffentlichungsnummer: WO 2003/030468

(56) Entgegenhaltungen:
- EP-A- 0 859 491
- WO-A-00/04667
- US-A1- 2001 019 554

## Beschreibung

Durch die Einführung von paketorientierten Technologien wie UMTS und GPRS ist zu erwarten, dass die Datenübertragung in Zukunft vermehrt drahtlos erfolgen wird. Hierbei wird sich die Datenübertragung nicht nur auf die Übertragung von Sprachinformationen beschränken lassen, sondern es werden vermehrt andere Dienste, wie sie z. B. im Internet angeboten werden, drahtlos genutzt. Um die erhöhte Bandbreite der Endgeräte auch weiterleiten zu können, muss das Core-Netzwerk, das zur Verteilung der Informationen dient, ebenfalls ausgebaut werden. Auch in anderen Netzwerken, wie z. B. im Internet, ist ein stetig wachsender Bandbreitenbedarf festzustellen. Ein Großteil der Bandbreite geht beim Routen der Informationen verloren. Dies ist darauf zurückzuführen, dass ein Großteil der Entscheidungen, die eine Weiterleitung der Pakete betreffen, auf einer höheren Protokollebene getroffen werden. In der Regel handelt es sich hierbei um die IP-Ebene. In letzter Zeit wird jedoch vermehrt ein Label-orientiertes Routing beziehungsweise Switching eingesetzt. Es sei daraufhingewiesen, dass im Folgenden nicht zwischen den Begriffen Routing und Switching unterschieden wird, obwohl es hierfür in der Literatur unterschiedliche Ansätze gibt. Der Vorteil des Label-orientierten Routings liegt darin, dass die Informationsgröße, die für eine Entscheidung zu berücksichtigen ist, geringer ist und die Entscheidungsfindung aufgrund dieser geringeren Informationen und der Verwendung von bestimmten Klassen einfacher ist.

Eines der am häufigsten eingesetzten pfadorientierten Verfahren ist MPLS.

Auf Grund des simplen Aufbaus und der hohen Performance kann auch das Multiprotocol Label Switching (MPLS, IETF Proposed Standard, [RFC 3031 sowie weitere RFCs] mit Vorteil als Tunneltechnologie eingesetzt werden.

Bei MPLS-Netzen wandert ein Paket von einem Router zum nächsten. Jeder Router trifft eine unabhängige Entscheidung hinsichtlich des Weiterleitens. Das heißt, jeder Router analysiert den Header des Paketes, und jeder Router durchläuft ein Programm mit dem Router-Algorithmus. Jeder Router wählt eine neue Route in Abhängigkeit des Ergebnisses des Router-Algorithmus. Die Auswahl der nächsten Route erfolgt somit in zwei Schritten. Der erste Schritt partitioniert die gesamte Menge der möglichen Pakete in eine Menge von äquivalenten Klassen (FEC). Eine Äquivalenzklasse besteht in der Regel aus einer Menge von IP-Adressen oder bestimmten IP-Adressen-Muster, die durch Masken ermittelt werden. Der zweite Schritt bildet jede FEC auf eine Route ab. Was die Entscheidung der Weiterleitung angeht, wird keine Unterscheidung zwischen den Paketen gemacht, die der gleichen FEC angehören. Unterschiedliche Pakete, die der gleichen FEC angehören, können nicht unterschieden werden.

In einem MPLS-Netz erfolgt die Zuordnung zu einer FEC nur einmal, nämlich dann, wenn das Paket in das MPLS-Netzwerk eintritt. Die FEC, der ein Paket zugeordnet ist, ist als kurzer Wert codiert, der als Label bezeichnet wird. Wenn ein Paket zur nächsten Route gesendet wird, so wird das Label mitgesandt. Bei den folgenden Routern wird keinerlei Analyse der weiteren Inhalte des Paketes vorgenommen. Es wird lediglich das Label überprüft. Das Label wird als Index für eine Tabelle verwendet, aus der die nächste Route und das nächste Label entnommen werden können. Das alte Label wird durch das neue Label ersetzt und das Paket wird weitergeleitet in die nächste Route. In einem MPLS-Netz wird das Weiterleiten nur durch die Labels gesteuert. Dies hat eine Reihe von Vorteilen. So müssen die Router nur geringe Fähigkeiten haben. Sie müssen lediglich in der Lage sein, das Label zu analysieren und in einer Tabelle zu überprüfen, welche Route diesem Label zugeordnet ist, um das alte Label durch ein neues Label zu ersetzen. Weiterhin kann durch diese einfachen Aufgaben ein hoher Durchsatz realisiert werden. Weitere Vorteile können der RFC 3031 entnommen werden.

Im Folgenden werden einige Grundsätze definiert. Ein Label ist ein kurzer, örtlich signifikanter Bezeichner, der eine feste Länge aufweist, um eine FEC zu identifizieren. Das Label dient zur Repräsentation einer FEC, der das Paket zugeordnet ist. In der grundsätzlichen Verwendung der FEC wird diese auf der Grundlage der Zieladressen des Netzwerk-Layers zugeordnet.

Um sicherzustellen, dass die Router die Pakete denselben Äquivalenzklassen zuordnen, müssen die Router regelmäßig Informationen austauschen, aus denen ersichtlich ist, welche Pakete einem Label zugeordnet werden. Weiterhin ist es wichtig, dass nicht dieselben Labels von unterschiedlichen Routern verwandt werden, soweit hierdurch eine eindeutige Identifikation des vorhergehenden Routers unmöglich wird. Weiterhin ist darauf hinzuweisen, dass Up-Streams und Down-Streams unterschiedlich behandelt werden. So weisen diese nicht unbedingt dieselben Labels auf. In der MPLS-Architektur wird die Entscheidung, ein bestimmtes Label an eine bestimmte Äquivalenzklasse zu binden, durch den Router vorgenommen, der Down-Stream in Bezug zu dieser Bindung ist. Der Router, der Down-Stream ist, informiert dann den Router, der Up-Stream ist, von dieser Bindung. Diese Information kann z. B. als Huckepackinformation auf anderen Paketen oder durch dezidierte Informationsübertragung übertragen werden [RFC 3031, 3035, 3036, 3037, 3038, 2205-2210, 2379, 2380, 2746, 2750, 2814, 2702].

In einer weiteren Ausgestaltung unterstützt MPLS eine Hierarchie, wobei das Bearbeiten der mit Labeln versehener Pakete vollständig unabhängig von dem Level der Hierarchie ist. Ein Paket, das kein Label aufweist, kann als Paket betrachtet werden, dessen Stack leer ist. Die Verwendung des Stacks wird deutlich, wenn man vom Tunneln der Pakete spricht. Ein solches Tunneln kann dem Dokument RFC 3031 entnommen werden. Pakete werden immer dann getunnelt, wenn sie durch einen Netzwerkpfad geführt werden, der zwischen zwei Routern liegt, wobei dieser Netzwerkpfad wiederum eine Reihe von Routern umfassen kann. Wurde z. B. ein expliziter Pfad vorgegeben, der die Router R1 bis R4 umfasst, und liegt zwischen dem Router R1 und R2 ein Pfad, der die Router R1.1, R1.2, R1.3 umfasst, so wird ein weiteres Label durch den Router R1 auf den Stack gepusht. Die Router R1.1, R1.2, R1.3 arbeiten nun auf diesem neuen zweiten Element. Sobald das Paket bei Router R2 ankommt, wird das oberste Element vom Stack gepoppt. Problematisch wird es, wenn kein Label auf dem Stack ist. Bei der normalen MPLS-Architektur wird die Netzwerkadresse (im Normalfall die IP-Adresse) analysiert, um eine Äquivalenzklasse zu bestimmen.

MPLS bietet zwei Arten der Routenauswahl. Die eine Routenauswahl legt die Route bereits am Startpunkt fest. Es werden die einzelnen Router bestimmt, die durchlaufen werden müssen. Es handelt sich hierbei um ein explizites Routen. Beim hop-byhop-Routen werden die Router nicht explizit festgelegt, sodass jeder Router anhand seiner Tabellen festlegen kann, welcher der nachfolgende Router sein soll. Die vorliegende Erfindung kann mit beiden Möglichkeiten der Routenauswahl betrieben werden.

Betrachtet man die Informationsgröße, die benötigt wird, um die Pakete zu routen, das heißt die Header, so wird deutlich, dass bei Pfad-orientierten Protokollen ein enormes Einsparungspotenzial vorhanden ist. IPv6-Header verursachen mehr als 40 Byte Header-Overhead bei einer Transportdatengröße von durchschnittlich 60 Byte (IPv6 incl. Routing Header), deren Nutzdaten wiederum nur etwa 20 Byte (VoIP) umfassen [RFC 3031, RFC 2460]. Mittels eines Shim-Headers bzw. MPLS-Headers von z. B. MPLS werden jeweils nur 4 Byte induziert. Ein Shim-Header, auch MPLS-Header, umfasst neben dem Label, dass ca. 20 Bits ausmacht, weitere Status- und Verwaltungsinformationen. Grundsätzlich sind eine eindeutige Identifizierung des Punkt-zu-Punkt-Links mit seinen Eigenschaften, z. B. Quality of Service (QoS), sowie natürlich die des jeweiligen Bearers notwendig.

Neben der Beschleunigung der Paketweiterleitung durch Layer 2-Labelauswertung anstelle aufwendiger Layer 3-Headerauswertung i. V. m. Longest-Prefix-Match kann der Paketpfad explizit vorgegeben werden (Source Routing), wodurch für alle Pfade der gleiche Pfad erzwungen wird. Hierdurch kann mehr Kontrolle, insbesondere hinsichtlich des Gesichtspunktes der Quality of Service erreicht werden.

Durch die Verwendung von Tunneln können Layer 3-Routingvorgänge und -entscheidungen zwischen örtlich getrennten (und durch ein Transportnetz verbundenen) Teilnetzen eines Betreibers vermieden werden. Dieser Ansatz ist immer dann von Bedeutung, wenn virtuelle, private Netze realisiert werden sollen.

Ein weiterer Punkt ist das Vermeiden von L3-Routingvorgängen und -entscheidungen zwischen örtlich getrennten Forwarding-Einheiten in Mobilen-IP-Architekturen. ("Hierarchical Mobile IP", siehe entsprechenden draft bei www.ietf.org im Internet)

Aufgrund der genannten Vorteile gewinnt die Verwendung von Label-Switched-Pfaden in Paketnetzen (z.B. mittels MPLS, Multi-Protcol-Label-Switching) als Routingvereinfachung zunehmend an Bedeutung.

Die Verwendung von Label-Switch-Pfaden hat jedoch auch einige Nachteile. Durch die anfängliche, feste Vorgabe des Pfades kann z. B. MPLS nicht dynamisch lokal begrenzt auf aktuelle Entwicklungen wie Lastverschiebungen, Änderungen der Verfügbarkeit und Bandbreite von Netzkomponenten reagieren.

Bisherige Lösungen für diese Fälle beobachten das Netz von außen kontinuierlich, um dann ggf. durch die Standard-MPLS-Signalisierung die Pfade jeweils von Anfang bis Ende neu aufzubauen. Hierbei werden die vollständigen Pfade so reorganisiert, dass der Pfad den geänderten Bedingungen und Verbindungsvorgaben gerecht wird. Hierbei muss jedoch durch eine zentrale Einheit kontinuierlich das gesamte Netz, insbesondere die Router und Netzwerksegmente, die sich an die Router anschließen, überwacht werden.

Dieses Monitoring erfordert erheblichen Aufwand während des Betriebs auf Seiten der Netzbetreiber und verursacht einen Hauptanteil der Kosten.

Aus Dokument US 2001/0019554 A1 ist ein label switched network System bekannt, das mehrere Knoten und optional einen policy server umfasst und das den Netzwerkverkehr durch intensive Überwachung verschiedener Datenströme im label switched network erlaubt. Die Dokumente WO 00/04667 und EP 0859491A1 beschreiben ähnliche Verfahren.

Aufgabe der vorliegenden Erfindung ist es, ein Verfahren bereitzustellen, das eine optimierte Überwachung des Netzwerkes ermöglicht.

Gelöst wird diese Aufgabe durch Verfahren und Vorrichtungen mit den Merkmalen der unabhängigen Ansprüche. Weitere Ausgestaltungen sind den Unteransprüchen zu entnehmen.

Der grundlegende Ansatz liegt darin, begrenzte und autonome Entscheidungen der Label Switched Router (LSR) im Label Switched Routing zuzulassen.

Die Label Switched Router (LSR) bekommen durch eine Erweiterung des Signalisierungsprotokolls, z. B. des LDP [RFCs 3031, 3035, 3036, 3037, 3038] oder RSVP [2205-2210, 2379, 2380, 2746, 2750, 2814], die Möglichkeit, die Pfade autonom auf andere Nachbarknoten umzuleiten. Die genannten Protokolle sind Standardprotokolle, mit Hilfe derer Netzwerkkomponenten Verwaltungsinformationen austauschen. Es ist jedoch auch möglich andere nicht standardisierte Protokolle einzusetzen. Die einzelnen Netzwerkkomponenten, in der Regel Router, beobachten zu diesem Zweck die aktuelle Routing-Situation (bzgl. Last und Verfügbarkeit) in ihrer unmittelbaren Umgebung, gleichen diesen Status unter Berücksichtigung des Pfades untereinander über ein erweitertes Signalisierungsprotokoll ab, um dann bei Bedarf die Label-Switched-Pfade entsprechend lokal anzupassen.

Die Router tauschen hierbei vorzugsweise in regelmäßigen Abständen den Status des Netzwerkes, insbesondere über die Lastverschiebung, Änderungen der Verfügbarkeit und Bandbreiten, aus, um mögliche Engpässe oder Verbesserungen zu erkennen. Durch die Verwendung eines periodisch synchronisierten Austausches kann ebenfalls festgestellt werden, ob ein bestimmter Router vollständig ausgefallen ist. Durch den Austausch der Informationen können im Falle von benachbarten Engpässen die Pfade, die über diese Engpässe führen, lokal mit Hilfe von Teilersatzpfaden so verändert werden, das die Engpässe umgangen werden. Bei diesen Teilersatzpfaden kann es sich um vorbereitete Pfade handeln, die bereits im Vorfeld angelegt wurden, um den Ausfall von bestimmten Komponenten oder Segmenten abfangen zu können. Eine Vorbereitung dieser Pfade ist nicht besonders aufwändig, da es sich nur um eine beschränkte Anzahl von benachbarten Routern bzw. Segmenten handelt, die überwacht werden. Lediglich für diese Router bzw. Segmente muss ein Teilersatzpfad gespeichert werden. Ferner ist darauf hinzuweisen, dass insbesondere bei MPLS-Pfaden nur in Datenflussrichtung eine Manipulation der Pfade erfolgt. Somit ist das Datenaufkommen, das zu verwalten ist, eher gering. In einer alternativen Ausführungsform können die benötigten Teilersatzpfade auch dynamisch erzeugt werden. Bei dieser Alternative werden die Teilersatzpfade vorzugsweise auf der Basis eines Routen-Algorithmus berechnet, der auf Routing-Tabellen zugreift, wobei dem Routen-Algorithmus als Parameter übergeben werden kann, welcher Router bzw. welches Netzwerksegment bei der Routenwahl zu berücksichtigen sind bzw. nicht zu berücksichtigen sind. Diese Algorithmen basieren auf den bekannten Verfahren, die insbesondere im IP-Netzwerk eingesetzt werden. Sollte ein benachbarter Router mitteilen, dass es Probleme auf einem bestimmten Segment gibt, so überprüft der im Datenfluss vorhergehende Router, ob er Pfade verwaltet, die über dieses Netzwerksegment geführt werden. Eine solche Analyse kann in der Regel mit Hilfe von Vergleichsoperationen erfolgen, wobei der Pfad daraufhin untersucht wird, ob er über dieses problematische Netzwerksegment geführt wird. Die dynamische Findung des Teilersatzpfades ist abhängig von der Art der Veränderung. Im Falle von benachbarten Verbesserungen, die z. B. auftreten können, wenn eine Lastsituation beendet wurde, sind die Pfade auszuwählen, die ursprünglich die Lastsituation umgangen haben. In einer möglichen Ausführungsform werden die Pfade markiert, die ursprünglich umgeleitet wurden, um bei einer Verbesserung der Lastsituation diese wiederum über ihr altes Netzwerksegment zu führen. Durch diese Markierung ist es einfacher, auf mögliche Änderungskandidaten zuzugreifen. Die Routing-Algorithmen müssen hierbei so angepasst werden, dass eine Route zu wählen ist, die notwendigerweise über das verbesserte Netzwerksegmen führt. Hierbei ist jedoch eine Gewichtung vorzunehmen, sodass nicht unnötigerweise Pfade umgeleitet werden, die vernünftigerweise nicht über dieses verbesserte Netzwerksegment geführt werden. Diese Gewichtung kann z. B. durch eine vorherige Markierung bestimmt werden. Eine Gewichtung kann auch in einer bestimmten Priorität oder eines bestimmten Quality of Service-Bedürfnisses liegen. In einer besonderen Ausführungsform werden die Pfade ausgewählt, die in Datenflussrichtung unmittelbar hinter dem verbesserten Netzwerksegment geführt werden, wobei jedoch das verbesserte Netzwerksegment nicht Bestandteil des Pfades ist. In diesem Fall kann durch ein einfaches Umleiten der Pfade über das verbesserte Netzwerksegment eine Beschleunigung des Datenverkehrs erreicht werden. In einer anderen Ausführungsform wird lediglich ein Knoten bzw. ein Router vor und nach dem verbesserten Netzwerksegment gewählt und überprüft, welche Pfade über diese beiden Router/Knoten geführt werden. Für diese Pfade wird dann der so ermittelte Teilersatzpfad integriert. In einer weiteren Ausgestaltungsform können weitere in der Umgebung des verbesserten Netzwerksegmentes liegende Router/Knoten berücksichtigt werden, um die Pfade zu ermitteln, die in einem größeren Abstand umgeleitet werden. Auch für diese kann dann ein entsprechender Teilersatzpfad integriert werden.

Sollte hingegen eine Verschlechterung der Übertragungssituation gegeben sein, so werden die Pfade bestimmt, die über das entsprechende schlechtere Netzwerksegment geführt werden, um dann dynamisch eine Route zu finden, die möglichst den ersten Knoten bzw. Router als Ziel hat, der in Datenflussrichtung nach dem schlechteren Netzwerksegment angeordnet ist. Sollte hierfür keine Route gefunden werden, so wird der übernächste Knoten bzw. Router gewählt, der Datenflussrichtung hinter dem schlechten Netzwerksegmente liegt. Sollte hingegen durch diese Methode kein Erfolg erzielt werden, so wird versucht einen Teilersatzpfad zu finden in dem die in Datenflussrichtung betrachteten Vorgänger-Knoten bzw. -Router das gleiche Verfahren anwenden. Die Algorithmen sind dabei so abgewandelt, dass das defekte Netzwerksegment nicht berücksichtigt wird. Sollte in unmittelbarer Umgebung kein Erfolg beschert sein, so wird das Verfahren zur Routenfindung abgebrochen. In einer optimierten Ausführungsform werden bereits durch einfache Strukturen, insbesondere Hash-Strukturen, den benachbarten Routern die Pfade zugewiesen, die über sie laufen.

Weitere bekannte hier nicht aufgeführte Algorithmen sind ebenfalls denkbar.

Zur Bestimmung der Router, die einer lokalen Kommunikationsmenge angehören, können ein automatisches Verfahren oder ein manuelles Verfahren eingesetzt werden. Bei beiden Ansätzen ist es natürlich sinnvoll, dass sich die Mengen überschneiden. Bei einer manuellen Konfiguration werden die benachbarten Router, mit denen ein Informationsaustausch über die Lastsituation des Netzes erfolgen soll, durch einen Administrator ausgewählt und zugeordnet. Bei einer automatischen Zuordnung kann eine Metrik verwendet werden, mit deren Hilfe die benachbarten Router bzw. Knoten bestimmt werden. Unter Vorgabe eines Schwellenwertes werden die Router bzw. Knoten ausgewählt, die innerhalb des Umkreises liegen, der durch den Schwellenwert bestimmt wird. So kann die Metrik z. B. die Anzahl von Knoten als Maß berücksichtigen. Weiterhin können die Längen der Netzwerksegmente in die Berechnung einfließen.

Für den Informationsaustausch werden bevorzugt bekannte Protokolle verwendet, die entweder die Informationen huckepack auf den Informationspaketen transportieren oder über eine separate Verbindung, die in der Regel auf TCP-IP basiert. In der Regel handelt es sich hierbei um RSVP oder LDP (siehe entsprechende RFCs). Es ist jedoch darauf zu achten, dass diese Protokolle nur in unmittelbarer Umgebung angewendet werden. Ein Ansprechen der Knoten bzw. Router über dezidierte Adressen ist somit vorteilhaft.

In der bevorzugten Ausführungsform wird MPLS zur Beschreibung der Pfade eingesetzt. Mit Hilfe von MPLS gibt es unterschiedliche Möglichkeiten, Teilersatzpfade in bestehende Pfade zu integrieren. In einer ersten Ausführungsform werden die Teilersatzpfade zum Tunneln verwendet. Ein Tunneln in MPLS wird dadurch erreicht, dass auf dem Stack des MPLS-Paketes weitere Label angeordnet werden. Ein detailliertes Beispiel findet sich weiter oben. In einer weiteren Ausführungsform wird ein expliziter Pfad in das Paket integriert. Bei einem expliziten Pfad werden die einzelnen Router bzw. Knoten in einer Liste aufgeführt, wobei die einzelnen Router an die Liste gebunden sind, wenn sie eine Entscheidung über das Weitersenden des Paketes treffen. Auch hierüber sind detaillierte Ausführungen oben zu finden. In der dritten Alternative, werden die Äquivalenzklassen geändert und an die benachbarten Router weiter gesendet. Hierbei entsteht in der Regel ein einmaliger, lawinenartiger Prozess, der sich durch einen begrenzten Bereich des Netzwerkes erstreckt. Eine detaillierte Beschreibung für dieses Verfahren findet sich in den oben genannten RFCs.

Ein weiterer Bestandteil der vorliegenden Erfindung ist eine Vorrichtung, insbesondere Router, zum Steuern von Label-Switched-Pfaden, insbesondere MPLS-Pfaden, in paketorientierten Netzwerken. Diese Vorrichtung zeichnet sich durch Mittel und deren Ansteuerung aus, die das erfindungsgemäße Verfahren realisieren. In der Regel handelt es sich hierbei um bekannte Komponenten, die bereits in Routern standardmäßig eingesetzt werden, die jedoch durch ein zusätzliches Softwaremodul in ihrer Funktionalität erweitert wurden.

In einer weiteren Ausgestaltungsform könnte es sich um einen zusätzlichen Prozessor handeln, der auf einen Speicherbereich zugreifen kann, wobei der Prozessor über eine Schnittstelle auf E/A-Geräte zugreifen kann, um einen Datenaustausch über die Ports des Routers zu ermöglichen.

Weiterhin weist die Vorrichtung Analysemittel auf, die vorzugsweise als Sensoren, Zähler oder Timer ausgebildet sind, um so mit Hilfe der Werte statistische Aussagen treffen zu können. Ein weiterer Aspekt, den die Analysemittel aufzeichnen, sind verlorene Pakete oder das Fehlen einer Statusrückmeldung eines benachbarten Routers. Mit den beschriebenen Mitteln ist es ohne weiteres möglich, den Status der Lastverschiebung, die Änderungen der Verfügbarkeit und der Bandbreite zu ermitteln. Über eine Schnittstelle, die vorzugsweise über eine IP-Adresse anzusprechen ist, werden die so ermittelten Informationen mit benachbarten Vorrichtungen, insbesondere Routern, ausgetauscht. Die Schnittstelle ist in der Regel so ausgebildet, dass sie mit der Art des Netzwerkes (Glasfaser, Kupfer) einhergeht, und dass eine Schnittstelle vorhanden ist, über die diese Informationen ausgetauscht werden.

Die so übertragenen Statusinformationen werden von jeder Vorrichtung in einem speziellen Speicherbereich gespeichert. Auf diesen Speicherbereich kann in der Regel durch schnelle Algorithmen, wie Hash-Tabellen, zugegriffen werden. In Relation zu diesen Informationen, die den einzelnen Routern zugeordnet sind, werden Pfade gespeichert, die über diese Router führen. Weiterhin werden Pfade gespeichert, die in der Vergangenheit über diese Router geführt wurden, die jedoch zu einem späteren Zeitpunkt umgeleitet wurden, indem Teilersatzpfade herangezogen wurden. Anhand dieser Informationen können nun einfach die Pfade bestimmt werden, deren Laufzeit verbessert werden kann.

Ein weiterer Bestandteil der Vorrichtung ist ein Mikroprozessor, der die Pfade ermittelt, die durch eine Veränderung des Netzwerkstatus betroffen sind. So kann die Ermittlung insbesondere dann schnell erfolgen, wenn eine eindeutige Indizierung, z. B. durch Hash-Tabellen, vorliegt, durch die die Pfade ermittelt werden können, die von der Veränderung betroffen sind. Dieser Vorgang ist immer dann einfach zu realisieren, wenn es sich um Verschlechterungen handelt. Liegen hingegen Verbesserungen des Netzwerkstatus vor, so müssen alle Pfade berücksichtigt werden, die dieses Netzwerksegment umgehen. Auch hierfür könnte eine separate Hash-Tabelle angelegt werden. Andere Algorithmen, die eine Suche oder einen Zugriff beschleunigen, könnten als Alternative eingesetzt werden. Es ist jedoch auch denkbar, die Pfade, die ein Segment umgehen, dadurch zu ermitteln, dass geprüft wird, ob vorgelagerte und nachgelagerte Knoten in Bezug auf das verbesserte Segment existieren. Sollte dies der Fall sein, so umgeht der Pfad das verbesserte Segment, und eine Verbindung mit Hilfe eines Teilersatzpfades über das Segment könnte von Vorteil sein.

Für die Suche der Teilersatzpfade werden bekannte Mittel eingesetzt, die bekannte Algorithmen zur Ermittlung von Routen realisieren. Eine Vielzahl von Router-Algorithmen ist aus der Literatur bekannt. Soweit notwendig, werden diese Algorithmen unter Berücksichtigung von Parametern ergänzt, wobei die Parameter entweder Angaben machen über die Segmente, die im Pfad enthalten sein sollen, oder die nicht enthalten sein sollen.

Die am weitesten verbreiteten Algorithmen nutzen zur Findung der Teilersatzpfade Routing-Tabellen, die in einem Speicherbereich abgelegt sind. Sollten solche Informationen fehlen, so werden Routing-Anfragen an benachbarte Router über entsprechende E/A-Schnittstellen gesendet, um die Tabellen aufzufrischen.

Bei der Teilersatzpfadbestimmung wird als vorrangiges Ziel der nächste Knoten angegeben, der erreichbar hinter dem Netzwerksegment angeordnet ist, das durch eine Leistungsänderung betroffen ist.

Um die genannte Funktionalität zu erreichen, werden in einer bevorzugten Ausführungsform die bereits vorhandenen Hardwarekomponenten durch eine angepasste Software gesteuert.

Im Folgenden wird auf die einzige Figur eingegangen. Es zeigt:

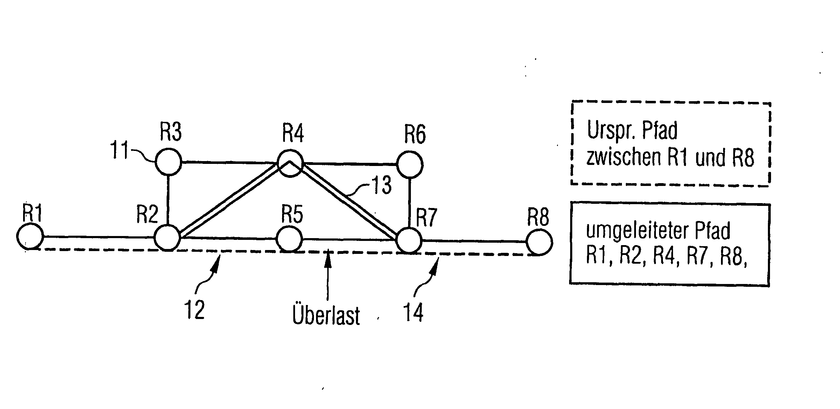

- Figur 1: ein Netzwerk, das aus mehreren Routern besteht, wobei ein Pfad, der ursprünglich über einen Knoten R5 geführt wurde, über einen anderen Pfad umgeleitet wird.

Die einzige Figur zeigt ein Netzwerk, das aus Routern 11 R1 bis R8 besteht, die durch Netzwerksegmente, die durch Linien dargestellt sind, verbunden sind. Die ursprüngliche Route 12, die gestrichelt dargestellt ist, führte von R1 über R2, R5, R7 bis nach R8. Aufgrund einer Überlast 14 zwischen den Routern R5 und R7 wurde dem Router R2 eine Mitteilung übersandt, dass das Segment keine ausreichende Performance bietet. Diese Sendung ging vom Router R5 aus. Der Router R2 wählt nun die kürzeste Umleitung 13, um dieses Segment zu umgehen. Im vorliegenden Fall handelt es sich bei der kürzesten Umleitung um den Teilersatz Pfad R2, R4, R7. Dieser Teilersatzpfad wird in den ursprünglichen Pfad eingebunden, sodass der Pfad nun R1, R2, R4, R7, R8 lautet. Es sei daraufhingewiesen, dass ebenfalls andere Überlegungen angestellt werden können, um einen Teilersatzpfad zu bilden. So hätte ebenfalls eine Umleitung über die Knoten R5, R4, R7 erfolgen können. Dies hängt immer von den verwendeten Heuristiken und der aktuellen Lastsituation ab.

## Patentansprüche

1. Verfahren zum Anpassen von Label-Switched-Pfaden, insbesondere MPLS-Pfaden, in paktorientierten Netzwerken, die Router aufweisen, wobei zumindest ein Teil der Router mit benachbarten Routern über ein Protokoll Informationen über den Status des Netzwerkes, insbesondere über die Lastverschiebung, Änderungen der Verfügbarkeit und Bandbreiten, austauscht, um mögliche Engpässe oder Verbesserungen zu erkennen,
**dadurch gekennzeichnet, dass**
im Falle von benachbarten Verbesserungen Teilersatzpfade erzeugt werden, mit denen bestehende Pfade, die die Verbesserungen umgehen, lokal so verändert werden, dass die Verbesserungen im Pfad enthalten sind.

2. Verfahren nach Anspruch 1, **dadurch gekennzeichnet, dass** im Falle von benachbarten Engpässen Teilersatzpfade erzeugt werden, mit denen die bestehende Pfade, die über diese Engpässe führen, lokal so verändert werden, dass die Engpässe umgangen werden.

3. Verfahren nach Anspruch 1 oder 2, **dadurch gekennzeichnet, dass** die Menge der benachbarten Router manuell zugeordnet ist oder in einem vorgegebenen Abstand angeordnet ist, wobei die Metrik für diesen Abstand definierbar ist.

4. Verfahren nach einem oder mehreren der vorhergehenden Ansprüche, **dadurch gekennzeichnet, dass** der Informationsaustausch unter den Routern entweder huckepack auf dem regulären Datenverkehr durchgeführt wird oder durch separate Verbindungen erfolgt.

5. Verfahren nach dem vorhergehenden Anspruch, **dadurch gekennzeichnet, dass** es sich um RSVP, LDP handelt.

6. Verfahren nach einem oder mehreren der vorhergehenden Ansprüche, **dadurch gekennzeichnet, dass** die Router jedem Pfad, den sie verwalten, die benachbarten Router zuordnen, die in diesen Pfaden liegen, wodurch die Anpassung der bestehenden Pfade erleichtert wird, wenn ein bestimmter Router oder ein benachbartes Netzwerksegment, das von einem Router ausgeht, eine Leistungsschwankung aufweist.

7. Verfahren nach einem oder mehreren der vorhergehenden Ansprüche, **dadurch gekennzeichnet, dass** für die Verschlechterung der Leistung eines benachbarten Routers oder eines benachbarten Netzwerksegmentes vorbereitete Teilersatzpfade verwaltet werden, die so ausgebildet sind, dass der Router bzw. das Netzwerksegment umgangen wird, indem die Teilersatzpfade in einen bestehenden Pfad integriert werden, oder dass für die Verbesserung der Leistung eines benachbarten Routers oder eines benachbarten Netzwerksegmentes vorbereitete Teilersatzpfade verwaltet werden, die so ausgebildet sind, dass der Router bzw. das Netzwerksegment im Pfad liegen, indem die Teilersatzpfade in einen bestehenden Pfad integriert werden.

8. Verfahren nach einem oder mehreren der vorhergehenden Ansprüche, **dadurch gekennzeichnet, dass** im Falle einer Leistungsschwankung bei den benachbarten Routern oder Netzwerksegmenten ein dynamischer Teilersatzpfad erzeugt wird, indem im Falle der Verbesserung der Leistung eines benachbarten Routers oder eines benachbarten Netzwerksegmentes, ein Teilersatzpfad so gebildet wird, dass der Router oder das Netzwerksegment nach der Integration des Teilersatzpfades innerhalb des bestehenden Pfades liegt, und
im Falle der Verschlechterung der Leistung eines benachbarten Routers oder eines benachbarten Netzwerkensegmentes ein Teilersatzpfad so gebildet wird, dass der Router oder das Netzwerksegment nach der Integration des Teilersatzpfades außerhalb des bestehenden Pfades liegen.

9. Verfahren nach einem oder mehreren der vorhergehenden Ansprüche, **dadurch gekennzeichnet, dass** die Teilersatzpfade auf der Basis eines Routen-Algorithmus berechnet werden, der auf Routing-Tabellen zugreift, wobei dem Routen-Algorithmus als Parameter übergeben werden kann, welcher Router bzw. welches Netzwerksegment bei der Routenwahl zu berücksichtigen sind bzw. nicht zu berücksichtigen sind.

10. Verfahren nach einem oder mehreren der vorhergehenden Ansprüche, **dadurch gekennzeichnet, dass** als Protokoll zur Beschreibung der Pfade MPLS eingesetzt wird, wobei die Teilersatzpfade durch Tunneln, durch Einfügen eines expliziten Pfades oder durch Ändern der Äquivalenzklassen und anschließendem Propagieren dieser Äquivalenzklassen realisiert werden.

11. Vorrichtung, insbesondere Router, zum Steuern von Label-Switched-Pfaden, insbesondere MPLS-Pfaden, in paktorientierten Netzwerken,
**gekennzeichnet durch** Mittel, die ein Verfahren nach einem oder mehreren der oben genannten Verfahrensansprüche realisieren, die dazu geeignet sind, dass zumindest ein Teil der Router mit benachbarten Routern über ein Protokoll Informationen über den Status des Netzwerkes, insbesondere über die Lastverschiebung, Änderungen der Verfügbarkeit und Bandbreiten, austauscht, um mögliche Engpässe oder Verbesserungen zu erkennen,
**dadurch gekennzeichnet, dass**
im Falle von benachbarten Verbesserungen Teilersatzpfade erzeugt werden, mit denen bestehende Pfade, die die Verbesserungen umgehen, lokal so verändert werden, dass die Verbesserungen im Pfad enthalten sind.

12. Vorrichtung nach Anspruch 11, **gekennzeichnet durch** Mittel und deren Ansteuerung, die dazu geeignet sind, dass im Falle von benachbarten Engpässen Teilersatzpfade erzeugt werden, mit denen die bestehenden Pfade, die über diese Engpässe führen, lokal so verändert werden, dass die Engpässe umgangen werden.

13. Vorrichtung nach dem Vorrichtungsanspruch 11 oder 12, **dadurch gekennzeichnet, dass** Analysemittel vorhanden sind, die eine Untersuchung des Status des benachbarten Netzwerkes durchführen, insbesondere den Status der Lastverschiebung, der Änderungen der Verfügbarkeit und der Bandbreiten, und dass eine Schnittstelle vorhanden ist, über die diese Informationen ausgetauscht werden.

14. Vorrichtung nach dem vorhergehenden Vorrichtungsanspruch, **dadurch gekennzeichnet, dass** der Netzwerkstatus für andere Router und nicht unmittelbar benachbarte Netzwerke in einem Speicherbereich gespeichert wird, um anhand dieser Informationen die Pfade zu bestimmen, deren Laufzeit verbessert werden kann.

15. Vorrichtung nach einem oder mehreren der vorhergehenden Vorrichtungsansprüche, **dadurch gekennzeichnet, dass** Mittel, insbesondere ein Mikroprozessor vorhanden ist, der die Pfade und die espeicherten Netzwerkstati miteinander vergleicht, um die Pfade zu ermitteln, die durch eine Veränderung des Netzwerkstatus betroffen sind,
um im Falle von benachbarten Engpässen einen Teilersatzpfad zu erzeugen, der die Engpässe umgeht, und
um im Falle von benachbarten Verbesserungen einen Teilersatzpfad zu erzeugen, der durch die Verbesserungen führt,
wobei der erzeugte Teilersatzpfad durch Anpassung der Router-Funktionalität in den bestehenden Pfad integriert wird.

16. Vorrichtung nach einem oder mehreren der vorhergehenden Vorrichtungsansprüche, **dadurch gekennzeichnet, dass** die Mittel zur Auswahl so eingerichtet sind, dass ein möglichst kurzer Teilersatzpfad erzeugt wird.

17. Vorrichtung nach dem vorhergehenden Anspruch, **dadurch gekennzeichnet, das** die Teilersatzpfade durch Verwendung von Routing-Tabellen ermittelt werden, die in einem Speicherbereich abgelegt sind, oder durch Senden von Routing-Anfragen an benachbarte Router, wobei als Ziel des Pfades immer das Netzwerksegment oder der Router ausgewählt werden, die in Datenflussrichtung unmittelbar hinter dem Netzwerksegment angeordnet sind, das durch eine Leistungsänderung betroffen ist.

18. Vorrichtung nach einem oder mehreren der vorhergehenden Vorrichtungsansprüche, **dadurch gekennzeichnet, dass** bekannte Komponenten eines Routers durch entsprechende Programmierung mit Hilfe von Software so erweitert werden, dass die Funktionalität des Verfahrens erreicht wird.

## Claims

1. Method for modifying label switched paths, in particular MPLS paths, in packet-oriented networks containing routers, whereby at least some of the routers use a protocol to exchange data about the status of the network, in particular about the load displacement, and changes in the availability and bandwidth, to identify possible bottlenecks or improvements,
**characterized in that**
if there are neighbouring improvements, alternate subpaths are created which make local changes to existing paths which bypass the improvements such that the improvements are incorporated into the path.

2. Method in accordance with claim 1, **characterized in that** if there are neighbouring bottlenecks, alternate subpaths are created which make local changes to existing paths which bypass the bottlenecks such that the improvements are incorporated into the path.

3. Method in accordance with claim 1 or 2, **characterized in that** the set of neighbouring routers is assigned manually or is arranged to be at a certain distance, whereby the metric for determining this distance can be defined.

4. Method in accordance with one or more of the preceding claims, **characterized in that** the exchange of data between the routers is effected either pickaback on the regular data traffic, or by separate connections.

5. Method in accordance with the preceding claim, **characterized in that** RSVP or LDP is used.

6. Method in accordance with one or more of the preceding claims, **characterized in that** the routers assign to each path which they administer the neighbouring routers which lie on these paths, which facilitates the modification of existing paths if a certain router or a neighbouring network segment which emanates from a router is subject to a performance fluctuation.

7. Method in accordance with one or more of the preceding claims, **characterized in that** ready-prepared alternate subpaths are administered in case there is a deterioration in the performance of a neighbouring router or a neighbouring network segment, these being structured so as to effect a diversion round the router or network segment, as applicable, by integration of the alternate subpath into an existing path, or that ready-prepared alternate subpaths are administered in case there is an improvement in the performance of a neighbouring router or a neighbouring network segment, these being structured so as to effect the inclusion of the router or network segment, as applicable, in the path by integration of the alternate subpath into an existing path.

8. Method in accordance with one or more of the preceding claims, **characterized in that**, if there is a performance fluctuation in the neighbouring routers or network segments, a dynamic alternate subpath is generated, such that in the event of an improvement in the performance of a neighbouring router or a neighbouring network segment an alternate subpath is formed in such a way that the router or the network segment lies within the existing path after the alternate subpath has been integrated, and
in the event of a deterioration in the performance of a neighbouring router or a neighbouring network segment an alternate subpath is formed in such a way that the router or the network segment lies outside the path after the alternate subpath has been integrated.

9. Method in accordance with one or more of the preceding claims, **characterized in that** the alternate subpath is calculated on the basis of a route algorithm which accesses routing tables, whereby the routers or network segments which are to be considered or not to be considered in selecting the route can be passed to the route algorithm as a parameter.

10. Method in accordance with one or more of the preceding claims, **characterized in that** MPLS is used as the protocol for specifying the paths, whereby the alternate subpaths are realized by tunnelling, by the insertion of an explicit path, or by changing the equivalence classes and then propagating these equivalence classes.

11. Device, in particular a router, for controlling label-switched paths, in particular MPLS paths, in packet-oriented networks,
**characterized by** means which realize a method in accordance with one or more of the method claims cited above which are suitable so that at least a part of the routers exchange information via a protocol with neighbouring routers about the status of the network, especially about load displacement, changes to availability and bandwidths, in order to identify possible bottlenecks or improvements
**characterized in that**
if there are neighbouring improvements, alternate subpaths are created which make local changes to existing paths which bypass the improvements such that the improvements are incorporated into the path.

12. Device in accordance with claim 11, **characterized by** means and their controller which are suitable, if there are neighbouring bottlenecks, for creating alternate subpaths which make local changes to existing paths which bypass the bottlenecks such that the bottlenecks are incorporated into the path.

13. Device in accordance with the preceding device claim 11 or 12, **characterized in that** means of analysis are present which carry out a check on the status of the neighbouring network, in particular the status of the load displacement, and the changes in the availability and bandwidths, and that there is an interface via which these items of data can be exchanged.

14. Device in accordance with the preceding device claim, **characterized in that** the network status for other routers and for networks which are not immediately neighbouring is stored in a storage area, in order to use these items of data to determine the paths for which the propagation times can be improved.

15. Device in accordance with one or more of the preceding device claims, **characterized in that** there are facilities, in particular a microprocessor, which compare the paths and the stored network statuses with each other, in order to determine the existing paths which are affected by a change in the network status
in order, in the event of neighbouring bottlenecks, to create an alternate subpath which diverts round the bottleneck, and in the event of a neighbouring improvement to create an alternate subpath which passes through the improvement, whereby the alternate subpath which is created is integrated into the existing path by modification of the router functionality.

16. Device in accordance with one or more of the preceding device claims, **characterized in that** the means by which a selection is made are set up so that the shortest possible alternate subpath is determined.

17. Device in accordance with the preceding device claim, **characterized in that** the alternate subpaths are determined by the use of routing tables which are held in a storage area, or by the sending of routing queries to neighbouring routers, whereby the destination selected for the path is always the network segment or the router which is located in the data flow direction immediately after the network segment which is affected by the performance change.

18. Device in accordance with one or more of the preceding device claims, **characterized in that** familiar components of a router are enhanced by appropriate programming using software so that the functionality of the method is achieved.

## Revendications

1. Procédé d'adaptation de chemins à commutation d'étiquettes, notamment de chemins MPLS, dans des réseaux orientés paquets comprenant des routeurs, au moins une partie des routeurs échangeant avec des routeurs voisins, par le biais d'un protocole, des informations sur l'état du réseau, notamment sur le transfert de charge, les changements de disponibilité et des bandes passantes, pour détecter d'éventuels goulots d'étranglement ou d'éventuelles améliorations,
**caractérisé en ce que**,
en cas d'améliorations voisines, on produit des chemins de substitution partiels à l'aide desquels des chemins existants contournant les améliorations sont modifiés localement de manière à ce que les améliorations soient contenues dans le chemin.

2. Procédé selon la revendication 1, **caractérisé en ce que**, en cas de goulots d'étranglement voisins, on produit des chemins de substitution partiels à l'aide desquels les chemins existants passant par ces goulots d'étranglement sont modifiés localement de manière à ce que les goulots d'étranglement soient contournés.

3. Procédé selon la revendication 1 ou 2, **caractérisé en ce que** l'ensemble des routeurs voisins fait l'objet d'une assignation manuelle ou est situé à une distance prédéfinie, la métrique pour cette distance pouvant être définie.

4. Procédé selon l'une ou plusieurs des revendications précédentes, **caractérisé en ce que** l'échange d'informations entre les routeurs se fait soit de manière superposée sur le trafic de données régulier, soit grâce à des liaisons séparées.

5. Procédé selon l'une des revendications précédentes, **caractérisé en ce qu'**il s'agit de RSVP, LDP.

6. Procédé selon l'une ou plusieurs des revendications précédentes, **caractérisé en ce que** les routeurs assignent à chaque chemin qu'ils gèrent les routeurs voisins situés sur ces chemins, ce qui facilite l'adaptation des chemins existants lorsqu'un routeur déterminé ou un segment de réseau voisin partant d'un routeur présente une variation de performance.

7. Procédé selon l'une ou plusieurs des revendications précédentes, **caractérisé en ce que**, pour la dégradation de la performance d'un routeur voisin ou d'un segment de réseau voisin, on gère des chemins de substitution partiels préparés qui sont exécutés de manière à ce que le routeur resp. le segment de réseau soit contourné en intégrant les chemins de substitution partiels dans un chemin existant, ou **en ce que**, pour l'amélioration de la performance d'un routeur voisin ou d'un segment de réseau voisin, on gère des chemins de substitution partiels préparés qui sont exécutés de manière à ce que le routeur resp. le segment de réseau se trouve dans le chemin en intégrant les chemins de substitution partiels dans un chemin existant.

8. Procédé selon l'une ou plusieurs des revendications précédentes, **caractérisé en ce que**, en cas de variation de la performance au niveau des routeurs ou segments de réseau voisins, on produit un chemin de substitution partiel dynamique en formant, dans le cas de l'amélioration de la performance d'un routeur voisin ou d'un segment de réseau voisin, un chemin de substitution partiel de manière à ce que le routeur ou le segment de réseau se trouve à l'intérieur du chemin existant après l'intégration du chemin de substitution partiel et,
en cas de dégradation de la performance d'un routeur voisin ou d'un segment de réseau voisin, on forme un chemin de substitution partiel de manière à ce que le routeur ou le segment de réseau se trouve à l'extérieur du chemin existant après l'intégration du chemin de substitution partiel.

9. Procédé selon l'une ou plusieurs des revendications précédentes, **caractérisé en ce que** les chemins de substitution partiels sont calculés sur la base d'un algorithme de routage accédant à des tables de routage, dans lequel on peut fournir à l'algorithme de routage en tant que paramètre, quel routeur resp. quel segment de réseau doit être pris en compte resp. ne doit pas être pris en compte lors du choix d'une route.

10. Procédé selon l'une ou plusieurs des revendications précédentes, **caractérisé en ce qu'**on utilise MPLS en tant que protocole pour la description des chemins, les chemins de substitution partiels étant réalisés grâce à une transmission par tunnel, à l'insertion d'un chemin explicite ou à la modification des classes d'équivalence suivie de la propagation de ces classes d'équivalence.

11. Dispositif, notamment routeur, pour commander des chemins à commutation d'étiquettes, notamment des chemins MPLS, dans des réseaux orientés paquets,
**caractérisé par** des moyens qui réalisent un procédé selon l'une ou plusieurs des revendications de procédé mentionnées ci-dessus et qui sont adaptés pour qu'au moins une partie des routeurs échange avec des routeurs voisins, par le biais d'un protocole, des informations sur l'état du réseau, notamment sur le transfert de charge, les changements de disponibilité et des bandes passantes, pour détecter d'éventuels goulots d'étranglement ou d'éventuelles améliorations,
**caractérisé en ce que**,
en cas d'améliorations voisines, on produit des chemins de substitution partiels à l'aide desquels des chemins existants contournant les améliorations sont modifiés localement de manière à ce que les améliorations soient contenues dans le chemin.

12. Dispositif selon la revendication 11, **caractérisé par** des moyens et leur commande qui sont adaptés pour produire, en cas de goulots d'étranglement voisins, des chemins de substitution partiels à l'aide desquels les chemins existants passant par ces goulots d'étranglement sont modifiés localement de manière à ce que les goulots d'étranglement soient contournés.

13. Dispositif selon la revendication de dispositif 11 ou 12, **caractérisé en ce que** des moyens d'analyse sont présents, lesquels moyens procèdent à un examen de l'état du réseau voisin, notamment l'état du transfert de charge, des changements de disponibilité et des bandes passantes, et **en ce qu'**une interface est présente, par le biais de laquelle ces informations sont échangées.

14. Dispositif selon la revendication de dispositif précédente, **caractérisé en ce que** l'état du réseau pour d'autres routeurs et des réseaux qui ne sont pas immédiatement voisins est enregistré dans une zone de mémoire pour déterminer, à l'aide de ces informations, les chemins dont le temps de parcours peut être amélioré.

15. Dispositif selon l'une ou plusieurs des revendications de dispositif précédentes, **caractérisé en ce qu'**un moyen, notamment un microprocesseur, est présent, qui compare les uns aux autres les chemins et les états du réseau enregistrés pour déterminer les chemins qui sont concernés par une modification de l'état du réseau,
pour produire, en cas de goulots d'étranglement voisins, un chemin de substitution partiel qui contourne les goulots d'étranglement et
pour produire, en cas d'améliorations voisines, un chemin de substitution partiel passant par les améliorations,
le chemin de substitution partiel produit étant intégré dans le chemin existant grâce à une adaptation de la fonctionnalité du routeur.

16. Dispositif selon l'une ou plusieurs des revendications de dispositif précédentes, **caractérisé en ce que** les moyens de sélection sont établis de manière à produire un chemin de substitution partiel le plus court possible.

17. Dispositif selon la revendication précédente, **caractérisé en ce que** les chemins de substitution partiels sont déterminés en utilisant des tables de routage qui sont enregistrées dans une zone de mémoire ou en envoyant des demandes de routage à des routeurs voisins, le segment de réseau ou le routeur qui est situé directement derrière le segment de réseau concerné par un changement de performance, dans le sens du flux de données, étant toujours sélectionné en tant que but du chemin.

18. Dispositif selon l'une ou plusieurs des revendications de dispositif précédentes, **caractérisé en ce que** des composants connus d'un routeur sont étendus grâce à une programmation correspondante réalisée à l'aide d'un logiciel de manière à obtenir la fonctionnalité du procédé.
